# EUROPEAN PATENT SPECIFICATION

(11) **EP 3 515 021 B1**
(45) Date of publication and mention of the grant of the patent: **19.06.2024**
(21) Application number: 16922644.6
(22) Date of filing: 02.12.2016
(51) Int. Cl.: H04L 45/02, H04L 45/12, H04L 45/64, H04L 45/00

(54) **JOINT ROUTE ESTABLISHMENT METHOD AND SYSTEM**
VERFAHREN UND SYSTEM ZUR ERSTELLUNG EINER GEMEINSAMEN ROUTE
PROCÉDÉ ET SYSTÈME D'ÉTABLISSEMENT DE ROUTE CONJOINTE

(43) Date of publication of application: 24.07.2019
(73) Proprietor: Huawei Technologies Co., Ltd., Longgang District Shenzhen, Guangdong 518129 (CN)
(72) Inventor: SHI, Lei, Shenzhen, Guangdong 518129 (CN); QIAO, Guangyi, Shenzhen, Guangdong 518129 (CN)
(74) Representative: Gill Jennings & Every LLP
(86) International application number: PCT/CN2016/108427
(87) International publication number: WO 2018/098818

(56) References cited:
- CN-A- 101 072 171
- CN-A- 101 217 335
- US-A1- 2015 063 802
- US-A1- 2016 191 194
- US-A1- 2016 277 210
- US-B1- 8 787 154
- HUANG, QIONG et al.: "A Cost-based Integrated Routing Algorithm for IP/GMPLS over WDM Networks", Semiconductor Optoelectronics, vol. 31, no. 4, 31 August 2010 (2010-08-31), pages 597-602, XP009513523, ISSN: 1001-5868, DOI: 10.16818/j.issn1001-5868.2010.04.025

## Description

### TECHNICAL FIELD

This application relates to the field of communications technologies, and in particular, to a joint route establishment method and system.

### BACKGROUND

In a communications network, a backbone network used to implement large-scale (for example, inter-city) data transmission is in the ascendant. At present, the backbone network mainly uses cross-layer networking between an Internet Protocol (Internet Protocol, IP) layer and an optical layer. The IP layer may be used to transport an upper-layer service, including service encapsulation, multi-service convergence, service route selection, and the like. The optical layer may be used for large-capacity long-distance service transmission. In a service transmission process, a service first arrives at the IP layer. When resources at the IP layer are insufficient, the optical layer may be used jointly to transmit the service. In practical application, because the IP layer and the optical layer belong to two networks, in order to make the IP layer and the optical layer cooperate to transmit the service, a joint route needs to be established between the IP layer and the optical layer, that is, an optimal service transmission path needs to be established to transmit the service.

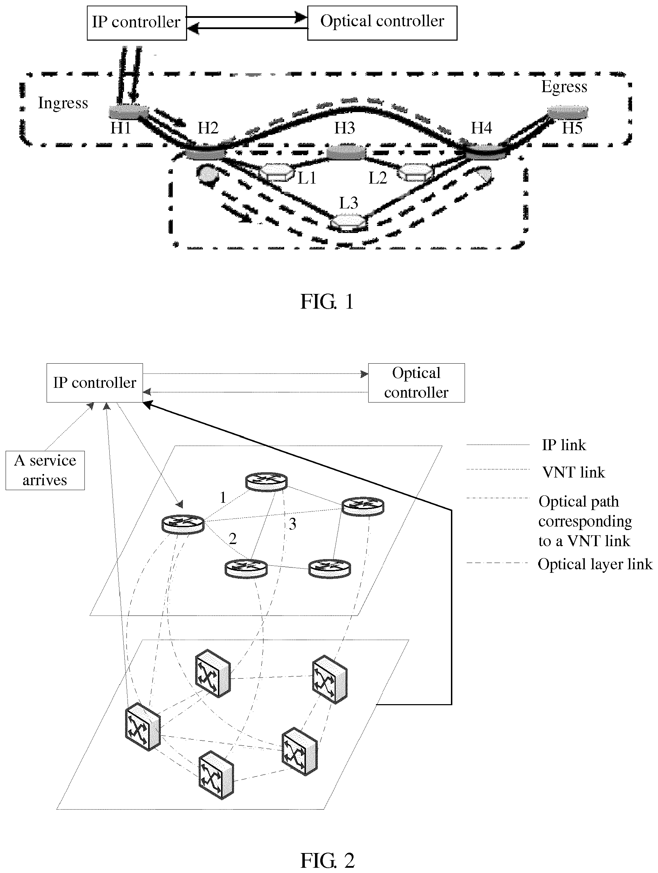

In the prior art, referring to FIG. 1, FIG. 1 shows a system architecture used for establishing a joint route between an IP layer and an optical layer. The system architecture mainly includes an IP controller and an optical controller. During system initialization, the IP controller may obtain virtual network topology (Virtual Network Topology, VNT) information of the optical layer from the optical controller. The VNT information is used to indicate a VNT link set. Each VNT link in the VNT link set is a virtual link and is used to represent reachability between two nodes at the IP layer, such as a link 1, a link 2, and a link 3 shown in FIG. 2. During transmission of a service, when the service arrives at the IP layer and the IP controller fails to compute a path for the service, it indicates that the IP layer cannot independently transmit the service. In this case, the IP controller needs to construct, based on an IP layer topology and the VNT information of the optical layer, an IP layer augmented topology, and determine, by using a shortest path first (Shortest Path First, SPF) algorithm, a transmission path that can be used to transmit the service. Then, the IP controller notifies the optical controller of a VNT identifier that is corresponding to an optical layer link that needs to be established on the transmission path, and the optical controller establishes the actual optical layer link according to the VNT identifier, so as to establish the joint route between the IP layer and the optical layer.

However, the joint route establishment method provided above has the following technical problem: A VNT link represents only that two nodes are reachable at the optical layer. Actually, possibly because multiple VNT links preempt a same optical layer resource, only one or a few of the multiple VNT links can be successfully established. However, when determining, based on the constructed IP layer augmented topology, the transmission path that can be used to transmit the service, the IP controller may require that multiple VNT links be simultaneously established. In this case, possibly because some of the VNT links fail to be established, the joint route fails to be established.

US 2015/063802 A1 describes a network of devices coupled by an optical network, and the network includes logical Label Switched Paths. A controller may receive a path request from a Network Management System for a path between two network devices in the network. An IP/MPLS layer element and an optical layer element of the controller may cooperate to service the path request. A topology module of the IP/MPLS layer element may determine whether an IP/MPLS path already exists between the network devices. If not, a topology module of the optical layer element may determine whether an optical path exists.

US 8787154 B1 describes techniques for dynamically scheduling and establishing paths in a multi-layer, multi-topology network. In one example, a multi-topology path computation element (PCE) accepts requests from client applications for dedicated paths. The PCE receives topology information from network devices and attempts to identify paths through a layer or combination of layers of the network that can be established at the requested time in view of the specifications requested for the dedicated paths and the anticipated bandwidth/capacity available in the network. The PCE schedules the identified paths through the one or more layers of the network to carry traffic for the requested paths. At the scheduled times, the PCE programs path forwarding information into network nodes to establish the scheduled paths. Validation techniques for paths include ensuring that specified endpoints exist and are reachable.

US 2016/0191194 A1 describes techniques for dynamically determining a logical network topology for more efficiently transporting network traffic over a physical topology based on end-to-end network traffic demands and optical transport network (OTN) characteristics of the network. The techniques may be applicable to meeting network traffic demands placed upon a multi-layer network having a base transport layer and a logical or overlay Internet Protocol (IP) layer routed on the transport layer.

### SUMMARY

To resolve a problem in the prior art, embodiments of the present invention provide a joint route establishment method and system. The technical solutions are as follows:
According to a first aspect, a joint route establishment method is provided as set out in claim 1.

Because an optical layer link may support different modulation modes, the unified topology may be abstracted as a multi-layer centralized topology. That is, in the unified topology, attributes of a link between two nodes may be different. For example, when a modulation mode supported by a link between two nodes is multi-frequency shift keying, it may be considered that the unified topology includes an IP layer topology and an optical layer topology; and when the modulation mode supported by the link between the two nodes is quadrature phase shift keying, it may be considered that the unified topology includes the IP layer topology and another optical layer topology.

In the foregoing joint route establishment process, the constructed unified topology may be used to indicate the topological relationships between all the nodes included at the IP layer and the optical layer. That is, the established joint route is established according to an actual IP layer link and optical layer link. Therefore, a case in which multiple VNT links preempt a same optical layer resource is avoided. This ensures that all joint routes that need to be established can be successfully established, and improves a success rate of joint route establishment.

The establishing, based on the unified topology, a joint route includes: determining, based on the unified topology and from the optical layer resource topology information, optical layer information required for establishing the joint route; sending, to an optical controller, the optical layer information required for establishing the joint route, so that the optical controller establishes an optical layer link; when receiving a first establishment success message sent by the optical controller, determining, based on the unified topology and from the IP layer resource topology information, IP layer information required for establishing the joint route, where the first establishment success message is used to indicate that the optical layer link has been successfully established; and sending, to the IP controller, the IP layer information required for establishing the joint route, so that the IP controller establishes an IP layer link.

In this embodiment of the present invention, in a possible implementation, an implementation process of establishing, based on the unified topology, a joint route may include: determining and establishing, based on the unified topology, the joint route by using a specified shortest path algorithm.

The joint route includes the optical layer link and the IP layer link, establishment of the optical layer link is controlled by the optical controller, and establishment of the IP layer link is controlled by the IP controller. Therefore, the optical layer information required for establishing the joint route needs to be sent to the optical controller, so that the optical controller establishes the optical layer link, and the IP layer information required for establishing the joint route needs to be sent to the IP controller, so that the IP controller establishes the IP layer link, so as to establish the joint route.

In the foregoing joint route establishment process, the optical layer information required for establishing the joint route and the IP layer information required for establishing the joint route are sent to the optical controller and the IP controller, respectively, so that the optical controller establishes the optical layer link, and the IP controller establishes the IP layer link, thereby implementing successful establishment of the joint route.

Before the determining, based on the unified topology and from the IP layer resource topology information, IP layer information required for establishing the joint route, the method further includes: marking the optical layer information required for establishing the joint route in the optical layer resource topology information as occupied information.

When the super controller receives the first establishment success message sent by the optical controller, it indicates that the optical controller has completed establishment of the optical layer link required by the joint route, and also indicates that the optical layer information used for the optical layer link has been used. In this case, the super controller marks the optical layer information, and further refreshes the optical layer resource topology information. In this way, in a next joint route establishment process, the super controller may know, according to a result of the refreshing, which optical layer information has been occupied and which optical layer information has not yet been occupied, and further determine optical layer information required for establishing a joint route.

In this embodiment of the present invention, corresponding optical layer resource topology information is refreshed according to specific optical layer path occupancy information, and entire-network refreshing is not required. This reduces a topology refreshing time.

Optionally, after the sending, to the IP controller, the IP layer information required for establishing the joint route, the method further includes: when receiving a second establishment success message sent by the IP controller, marking the IP layer information required for establishing the joint route in the IP layer resource topology information as occupied information, where the second establishment success message is used to indicate that the IP layer link has been successfully established.

When the super controller receives the second establishment success message sent by the IP controller, it indicates that the IP controller has completed establishment of the IP layer link required by the joint route, and also indicates that the IP layer information used for the IP layer link has been used. In this case, the super controller marks the IP layer information, and further refreshes the IP layer resource topology information. In this way, in a next joint route establishment process, the super controller may know, according to a result of the refreshing, which IP layer information has been occupied and which IP layer information has not yet been occupied, and further determine IP layer information required for establishing a joint route.

In this embodiment of the present invention, corresponding IP layer resource topology information is refreshed according to specific IP layer path occupancy information, and entire-network refreshing is not required. This reduces a topology refreshing time.

Optionally, the establishing, based on the unified topology, a joint route includes: when the joint route setting request carries a constraint condition of a to-be-transmitted service, establishing, based on the unified topology, a joint route that meets the constraint condition of the to-be-transmitted service.

In this embodiment of the present invention, the established joint route is established according to an actual IP layer link and optical layer link. Therefore, the finally established joint route can meet the constraint condition of the to-be-transmitted service. That is, a case in which an optical layer link in a joint route that is established according to VNT information cannot meet a constraint condition of a to-be-transmitted service is avoided. This ensures a service transmission success rate, and improves network resource utilization.

Optionally, the IP layer resource topology information includes at least one of a node, a link, a link cost, a link capacity, an affinity attribute, or a link attribute of the IP layer.

Specifically, the IP layer resource topology information includes a quantity of idle IP ports corresponding to IP layer nodes, an IP layer link with a remaining bandwidth, a path length value corresponding to each link, a link transmission delay, shared risk link group information, and the like.

The IP layer resource topology information includes the foregoing multiple kinds of information, so that the super controller can perceive node resource information of the IP layer. In this way, the super controller may construct the unified topology between the IP layer and the optical layer according to the IP layer resource topology information, and establish the joint route according to the unified topology.

Optionally, the optical layer resource topology information includes at least one of source node information, sink node information, inter-node idle wavelength information, a link distance, intra-node wavelength cross-connection information, trunk resource information, or a link-supported modulation mode of the optical layer.

The foregoing inter-node idle wavelength information includes a quantity of idle wavelengths transmitted between nodes, and the foregoing intra-node wavelength cross-connection information may include a cross-connect capability of an optical layer node, a minimum cost of an intra-node cross-connection, a cross-connect capacity of an intra-node wavelength, and the like.

The optical layer resource topology information includes the foregoing multiple kinds of information, so that the super controller can perceive node resource information of the optical layer. In this way, the super controller may construct the unified topology between the IP layer and the optical layer according to the optical layer resource topology information, and establish the joint route according to the unified topology.

According to a second aspect, a system is provided as set out in claim 6.

Technical effects obtained in the foregoing second aspect of the embodiments of the present invention are similar to a technical effect obtained by using a technical means corresponding to the first aspect, and details are not described herein.

An advantageous effect of the technical solutions provided by the embodiments of this application is: When the joint route setting request sent by the IP controller is received, it indicates that the IP controller fails to compute the path for the to-be-transmitted service. In this case, in order that transmission of the service can continue, the unified topology between the IP layer and the optical layer is constructed according to the IP layer resource topology information and the optical layer resource topology information, and the joint route is established according to the unified topology. Because the established joint route is determined according to the IP layer resource topology information and the optical layer resource topology information, a case in which multiple VNT links preempt an optical layer resource is avoided. This ensures that all joint routes that need to be established can be successfully established, and improves a success rate of joint route establishment.

### BRIEF DESCRIPTION OF DRAWINGS

FIG. 1 is a schematic diagram of an implementation environment;
FIG. 2 is a schematic diagram of an implementation environment;
FIG. 3A is a schematic diagram of an implementation environment according to the claimed invention;
FIG. 3B is a schematic structural diagram of a super controller;
FIG. 4A is a flowchart of a joint route establishment method according to an example;
FIG. 4B is a schematic diagram of optical layer resource topology information used in the example in FIG. 4A;
FIG. 4C is a schematic structural diagram of a unified topology used in the example in FIG. 4A;
FIG. 5A is a schematic structural diagram of a joint route establishment apparatus;
FIG. 5B is a schematic structural diagram of an establishment module 530;
FIG. 5C is a schematic structural diagram of another joint route establishment apparatus; and
FIG. 5D is a schematic structural diagram of another establishment module 530.

### DESCRIPTION OF EMBODIMENTS

To make the objectives, technical solutions, and advantages of this application clearer, the following further describes the implementations of this application in detail with reference to the accompanying drawings.

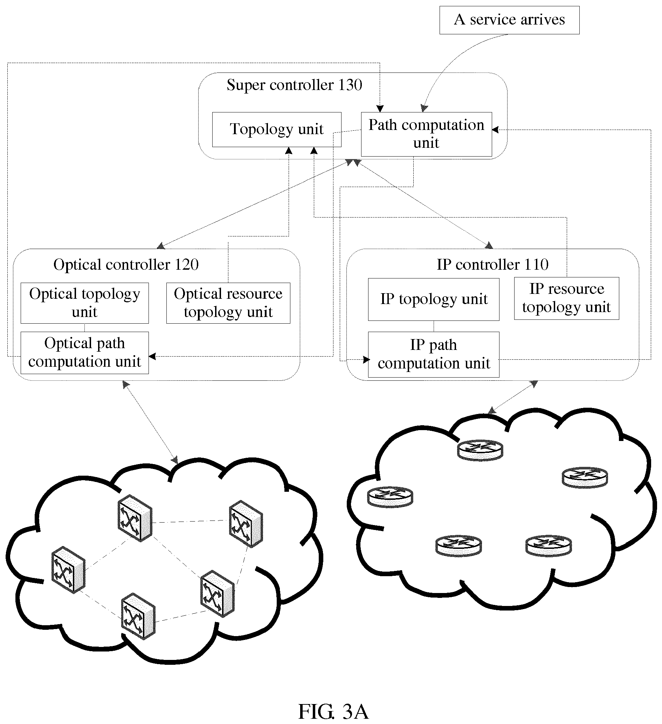

Before a joint route establishment method provided by the embodiments of this application is described, an implementation environment used in the embodiments of this application is described first. Referring to FIG. 3A, FIG. 3A is a schematic diagram of an implementation environment according to the claimed invention. The implementation environment mainly includes an IP controller 110, an optical controller 120, and a super controller 130. The super controller 130 may be connected to the IP controller 110 and the optical controller 120 by using a wired network or a wireless network.

Further, the IP controller 110 may include an IP topology unit, an IP resource topology unit, and an IP path computation unit. The IP controller 110 may determine IP layer resource topology information by using the IP resource topology unit, and send the IP layer resource topology information to the super controller 130. The IP controller 110 may further establish an IP layer link according to IP layer information by using the IP topology unit and the IP path computation unit. In addition, the IP controller 110 may further compute a path for a to-be-transmitted service by using the IP path computation unit.

Further, the optical controller 120 may include an optical topology unit, an optical resource topology unit, and an optical path computation unit. The optical controller 120 may determine optical layer resource topology information by using the optical resource topology unit, and send the optical layer resource topology information to the super controller 130. In addition, the optical controller 120 may further establish an optical layer link according to optical layer information by using the optical topology unit and the optical path computation unit.

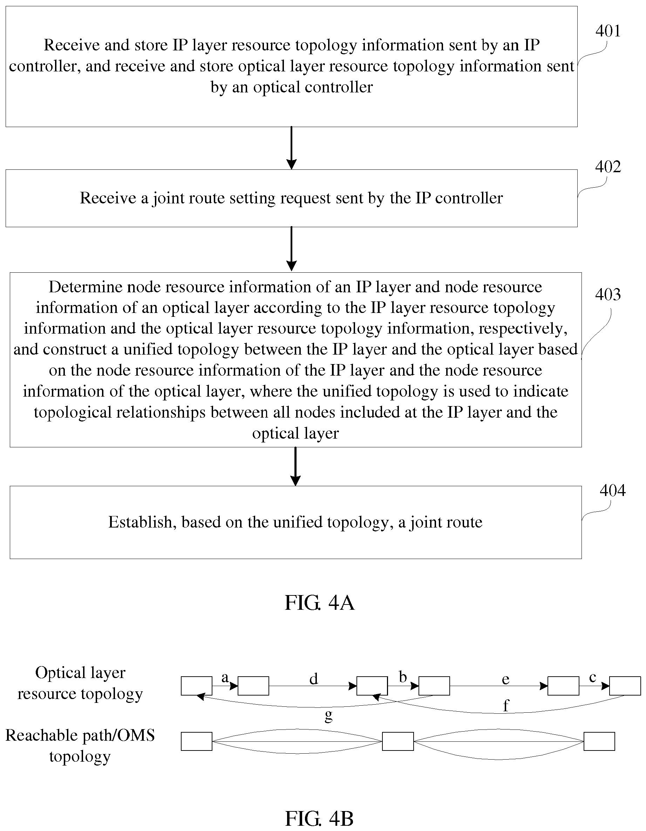

Further, the super controller 130 may include a topology unit and a path computation unit. The super controller 130 receives, by using the topology unit, the IP layer resource topology information sent by the IP controller 110 and the optical layer resource topology information sent by the optical controller 120. That is, the super controller 130 may perceive node resource information of an IP layer and node resource information of an optical layer. In addition, the super controller 130 constructs, by using the topology unit, a unified topology between the IP layer and the optical layer according to the IP layer resource topology information and the optical layer resource topology information. Besides, the super controller 130 further determines, based on the unified topology, a joint route by using the path computation unit. In conclusion, the super controller 130 is mainly configured to implement a joint route establishment method in the following embodiment in FIG. 4A. For a specific implementation process, refer to the following embodiment shown in FIG. 4A.

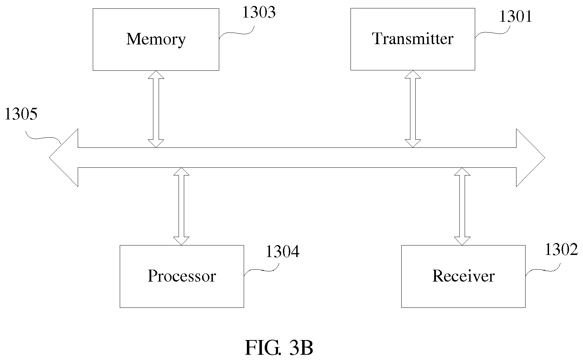

FIG. 3B is a schematic structural diagram of a super controller 130. The super controller 130 mainly includes a transmitter 1301, a receiver 1302, a memory 1303, a processor 1304, and a communications bus 1305. A person skilled in the art may understand that a structure of the super controller 130 shown in FIG. 3B does not constitute any limitation on the super controller 130. The super controller 130 may include components more or fewer than those shown in the figure, or in the super controller 130, some components are combined, or the components are disposed differently, which is not limited in this embodiment of this application.

The transmitter 1301 may be configured to send data and/or signaling and the like to an IP controller 110 and an optical controller 120. The receiver 1302 may be configured to receive data and/or signaling and the like sent by the IP controller 110 and the optical controller 120. The transmitter 1301 and the receiver 1302 are equivalent to the foregoing topology unit. The memory 1303 may be configured to store the data sent by the foregoing IP controller 110 and the foregoing optical controller 120, and the memory 1303 may be further configured to store one or more running programs and/or modules that are used to execute the joint route establishment method.

The processor 1304 is a control center of the super controller 130 and is equivalent to the foregoing path computation unit. The processor 1304 may be a general-purpose central processing unit (Central Processing Unit, CPU for short hereinafter), a microprocessor, an application-specific integrated circuit (Application-Specific Integrated Circuit, ASIC for short hereinafter), or one or more integrated circuits used to control execution of a program of the solution in this application. The processor 1304 may implement, by running or executing the software programs and/or modules stored in the memory 1303 and invoking the data stored in the memory 1303, a joint route establishment method provided by an embodiment in FIG. 4A below.

The communications bus 1305 may include a path and is configured to transfer information between the foregoing processor 1304 and the foregoing memory 1303.

FIG. 4A shows a joint route establishment method according to an example embodiment. This embodiment of this application is described by using an example in which the joint route establishment method is executed by the super controller 130 in FIG. 3A. The joint route establishment method may include the following several implementation steps.

Step 401: Receive and store IP layer resource topology information sent by an IP controller, and receive and store optical layer resource topology information sent by an optical controller.

The IP layer resource topology information is used to indicate node resource information of an IP layer, and the optical layer resource topology information is used to indicate node resource information of an optical layer.

In this embodiment of this application, during system initialization, the IP controller may send the node resource information of the IP layer to a super controller. After receiving the IP layer resource topology information, the super controller stores the IP layer resource topology information in a memory of the super controller. Similarly, the optical controller may also send the node resource information of the optical layer to the super controller. After receiving the optical layer resource topology information, the super controller stores the optical layer resource topology information in the memory of the super controller. In this way, the super controller may perceive node resource information used for establishing an IP layer link and an optical layer link.

In a possible implementation, the IP layer resource topology information includes at least one of a node, a link, a link cost, a link capacity, an affinity attribute, or a link attribute of the IP layer.

Specifically, the IP layer resource topology information includes a quantity of idle IP ports corresponding to nodes at the IP layer, an IP layer link with a remaining bandwidth, a path length value corresponding to each link, a link transmission delay, shared risk link group (Shared Risk Link Group, SRLG) information, and the like.

In a possible implementation, the optical layer resource topology information includes at least one of source node information, sink node information, inter-node idle wavelength information, a link distance, intra-node wavelength cross-connection information, trunk resource information, or a link-supported modulation mode of the optical layer.

The foregoing inter-node idle wavelength information includes a quantity of idle wavelengths transmitted between nodes.

The foregoing intra-node wavelength cross-connection information may include a cross-connect capability of an optical layer node, a minimum cost of an intra-node cross-connection, a cross-connect capacity of an intra-node wavelength, and the like.

Referring to FIG. 4B, in a possible implementation, each optical layer node may be represented by using two resource nodes. The cross-connect capability of the optical layer node may be abstracted as a link a, a link b, and a link c in FIG. 4B. Link costs of the link a, the link b, and the link c may be set to the minimum cost of the intra-node cross-connection, and the link capacity may include the cross-connect capacity of the intra-node wavelength and the trunk resource information.

Still referring to FIG. 4B, a transmission capability of an optical layer link may be abstracted as a link d, a link e, a link f, and a link g in FIG. 4B, and may be a reachable path/Optical Multiplex Section (OMS) link. Multiple parallel links between two nodes are represented by two unidirectional resource links. Link costs of the link d, the link e, the link f, and the link g may be set to a minimum cost required for completing transmission between two nodes, and the link capacity may be set to the quantity of idle wavelengths transmitted between nodes.

Here, it should be noted that step 401 is actually an optional step. That is, in an actual implementation process, step 401 does not need to be executed each time, and step 401 needs to be executed only in a system initialization phase.

Step 402: Receive a joint route setting request sent by the IP controller.

In a service transmission process, a to-be-transmitted service first arrives at the IP layer, and the IP controller computes a path for the to-be-transmitted service. When the IP controller fails to compute a path due to a factor such as insufficient resources at the IP layer, the IP controller sends the joint route setting request to the super controller.

In a possible implementation, the joint route setting request carries a constraint condition of the to-be-transmitted service. In another possible implementation, the joint route setting request may further carry the to-be-transmitted service.

It should be noted that the to-be-transmitted service may alternatively be sent to the super controller by the IP controller when the IP controller sends the joint route setting request to the super controller. This is not limited in this embodiment of the present invention.

Step 403: Determine node resource information of an IP layer and node resource information of an optical layer according to the IP layer resource topology information and the optical layer resource topology information, respectively, and construct a unified topology between the IP layer and the optical layer based on the node resource information of the IP layer and the node resource information of the optical layer, where the unified topology is used to indicate topological relationships between all nodes included at the IP layer and the optical layer.

When the node resource information of the IP layer and the node resource information of the optical layer are obtained, topological relationships between nodes may be determined according to the node resource information. Therefore, the super controller constructs the unified topology between the IP layer and the optical layer based on the node resource information of the IP layer and the node resource information of the optical layer.

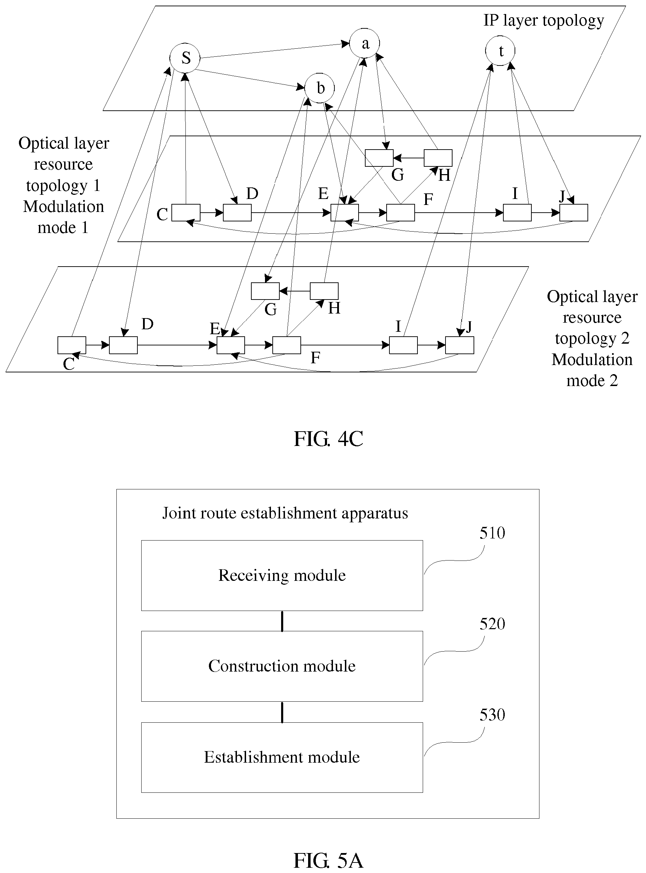

In an actual implementation process, the unified topology may be abstracted as a multi-layer centralized topology according to different modulation modes supported by the optical layer link. That is, referring to FIG. 4C, in the unified topology, attributes of a link between two nodes may be different. For example, when a modulation mode supported by a link between a node C and a node D is multi-frequency shift keying (Multi-Frequency Shift Keying, MFSK), it may be considered that an IP layer topology and an optical layer resource topology 1 form a centralized topology; and when the modulation mode supported by the link between the node C and the node D is quadrature phase shift keying (Quadrature Phase Shift Keying, QPSK), it may be considered that the IP layer topology and an optical layer resource topology 2 form another centralized topology. The foregoing multiple centralized topologies together form the unified topology.

It should be noted that all the foregoing centralized topologies are abstract topologies. In actual implementation, the unified topology between the IP layer and the optical layer, that is constructed according to the IP layer resource topology information and the optical layer resource topology information, has only one type of topological connection, as shown in FIG. 4C, except that each optical layer link may support multiple modulation modes.

Step 404: Establish, based on the unified topology, a joint route.

In a possible implementation, an implementation process of establishing, based on the unified topology, the joint route may include: determining and establishing, based on the unified topology, the joint route by using a specified shortest path algorithm.

The specified shortest path algorithm may include a Dijkstra (Dijkstra) algorithm, a Floyd-Warshall (Floyd) algorithm, and the like, which is not limited in this embodiment of the present invention.

It should be noted that generally, in the foregoing process of determining, based on the unified topology, the joint route by using a specified shortest path algorithm, in order to minimize a quantity of to-be-established optical layer links, the foregoing Dijkstra algorithm is used. By means of weight setting, it is controlled to select an IP layer resource topology for a route as far as possible. For a specific implementation process of determining and establishing, based on the unified topology, the joint route by using the Dijkstra algorithm, reference may be made to the prior art, and details are not described in this embodiment of the present invention.

In addition, when the foregoing joint route setting request carries the constraint condition of the to-be-transmitted service, the establishing, based on the unified topology, a joint route includes: establishing, based on the unified topology, a joint route that meets the constraint condition of the to-be-transmitted service.

An implementation process of establishing, based on the unified topology, a joint route is similar to an implementation process of establishing, based on the unified topology, a joint route that meets the constraint condition of the to-be-transmitted service. Then, the establishing, based on the unified topology, a joint route that meets the constraint condition of the to-be-transmitted service is used as an example to detail the specific implementation process of establishing, based on the unified topology, a joint route. The specific implementation process may mainly include the following sub-steps (1) to (4).
(1) Determine, based on the unified topology and from the optical layer resource topology information, optical layer information required for establishing the joint route.

As described above, in the foregoing execution process, the joint route that meets the constraint condition of the to-be-transmitted service may be determined in a manner such as by using the specified shortest path algorithm. That is, the joint route is an optimal transmission path. It is not difficult to understand that the joint route includes an optical layer link and an IP layer link that need to be established.

After the determining the joint route, the super controller determines the optical layer link, in the joint route, that needs to be established. Then, the super controller determines, from the optical layer resource topology information, optical layer information required for establishing the optical layer link.

(2) Send, to the optical controller, the optical layer information required for establishing the joint route, so that the optical controller establishes an optical layer link.

In an actual implementation process, because the joint route includes an optical layer link and an IP layer link, the optical layer link and the IP layer link need to be separately established in a process of establishing the joint route. In addition, establishment of the optical layer link is controlled by the optical controller. Therefore, after determining the optical layer information required for establishing the optical layer link, the super controller needs to send, to the optical controller, the optical layer information required for establishing the optical layer link, so that the optical controller establishes the optical layer link.

In an actual application process, there may be a case in which another service occupies the to-be-established optical layer link in the foregoing joint route. Therefore, after receiving the optical layer information required for establishing the optical layer link, the optical controller performs link verification and establishing. That is, the optical controller determines whether the optical layer link is occupied by another service. If the optical layer link is not occupied by another service, the optical controller generates, based on the optical layer information, an optical-layer wave planar bright enhancement pattern, and determines and establishes, based on the optical-layer wave planar bright enhancement pattern, the optical layer link.

(3) When receiving a first establishment success message sent by the optical controller, determine, based on the unified topology and from the IP layer resource topology information, IP layer information required for establishing the joint route, where the first establishment success message is used to indicate that the optical layer link has been successfully established.

After the optical layer link has been successfully established, the optical controller may send the first establishment success message to the super controller. When receiving the first establishment success message, the super controller determines that the optical layer link has been successfully established. In this case, an IP layer link part in the joint route is to be established. Before the IP layer link is established, the optical controller computes, based on the unified topology, the IP layer link, in the joint route, that needs to be established. Then, the super controller determines, from the IP layer resource topology information, IP layer information required for establishing the IP layer link.

(4) Send, to the IP controller, the IP layer information required for establishing the joint route, so that the IP controller establishes an IP layer link.

Similar to the above, establishment of the IP layer link is controlled by the IP controller. Therefore, after determining the IP layer information required for establishing the IP layer link, the super controller needs to send, to the IP controller, the IP layer information required for establishing the IP layer link, so that the IP controller establishes the IP layer link.

After receiving the IP layer information required for establishing the IP layer link, the IP controller performs link verification and establishing. That is, the IP controller determines whether the IP layer link that needs to be established is occupied by another service. If the IP layer link is not occupied by another service, the IP controller establishes, based on the IP layer information, the IP layer link.

After the IP controller successfully establishes the IP layer link, the foregoing joint route is successfully established. After the joint route is successfully established, the joint route can be used to transmit the to-be-transmitted service. That is, the super controller uses the joint route to deliver the to-be-transmitted service.

Referring to FIG. 4C, it is assumed that an IP layer link transmission delay of s->a is 6 ms and a link transmission delay of s->b is 7 ms. In addition, it is determined, according to a link distance between optical layer links, that an optical layer link transmission delay of a->t is 4 ms and an optical layer link transmission delay of b->t is 2 ms. If a link s->t with a link transmission delay being less than 10 ms is required to be established, it may be determined, according to optical layer information, that a finally established joint route is s->b->E->F->I->t. An arrow in FIG. 4C may indicate a flow direction of a service.

It should be noted that the foregoing description is provided only by using an example in which the optical controller and the IP controller have successfully established the optical layer link and the IP layer link, respectively. In an actual implementation process, if the optical controller has not successfully established the optical layer link and/or the IP controller has not successfully established the IP layer link, the super controller needs to re-establish, according to the unified topology, a joint route that meets the constraint condition of the to-be-transmitted service. For a specific implementation process, reference may be made to the foregoing description, and details are not described herein.

At this point, the present invention implements the joint route establishment method. In an actual implementation process, the super controller further needs to refresh the IP layer resource topology information and the optical layer resource topology information according to specific transmission path usage. A specific refreshing operation may include the following two implementations.

A first implementation: Mark the optical layer information required for establishing the joint route in the optical layer resource topology information as occupied information.

In other words, when the super controller receives the first establishment success message sent by the optical controller, it indicates that the optical controller has completed establishment of the optical layer link required by the joint route, and also indicates that the optical layer information used for the optical layer link has been used. In this case, the super controller marks the optical layer information, and further refreshes the optical layer resource topology information. In this way, in a next joint route establishment process, the super controller may know, according to a result of the refreshing, which optical layer information has been occupied and which optical layer information has not yet been occupied, and further determine optical layer information required for establishing a joint route.

In a possible implementation, an implementation process of marking the optical layer information required for establishing the joint route in the optical layer resource topology information as occupied information may include: adding a specified identifier for the optical layer information required for establishing the joint route, where the specified identifier is used to identify that the optical layer information has been occupied. For example, the specified identifier may be Used, which is not limited in this embodiment of the present invention.

A second implementation: When receiving a second establishment success message sent by the IP controller, mark the IP layer information required for establishing the joint route in the IP layer resource topology information as occupied information, where the second establishment success message is used to indicate that the IP layer link has been successfully established.

Similar to the above, when the super controller receives the second establishment success message sent by the IP controller, it indicates that the IP controller has completed establishment of the IP layer link required by the joint route, and also indicates that the IP layer information used for the IP layer link has been used. In this case, the super controller marks the IP layer information, and further refreshes the IP layer resource topology information. In this way, in a next joint route establishment process, the super controller may know, according to a result of the refreshing, which IP layer information has been occupied and which IP layer information has not yet been occupied, and further determine IP layer information required for establishing a joint route.

It should be noted that an implementation process of marking the IP layer information required for establishing the joint route in the IP layer resource topology information as occupied information is similar to the foregoing implementation process of marking the optical layer information required for establishing the joint route in the optical layer resource topology information as occupied information, and details are not described herein.

When corresponding resource topology information is refreshed according to specific path occupancy information, entire-network refreshing is not required. This reduces a time for refreshing the unified topology.

In this embodiment of the present invention, when the joint route setting request sent by the IP controller is received, it indicates that the IP controller fails to compute the path for the to-be-transmitted service. In this case, in order that transmission of the service can continue, the unified topology between the IP layer and the optical layer is constructed according to the IP layer resource topology information and the optical layer resource topology information, and the joint route is established according to the unified topology. Because the established joint route is determined according to the IP layer resource topology information and the optical layer resource topology information, a case in which multiple VNT links preempt an optical layer resource is avoided. This ensures that all joint routes that need to be established can be successfully established, and improves a success rate of joint route establishment.

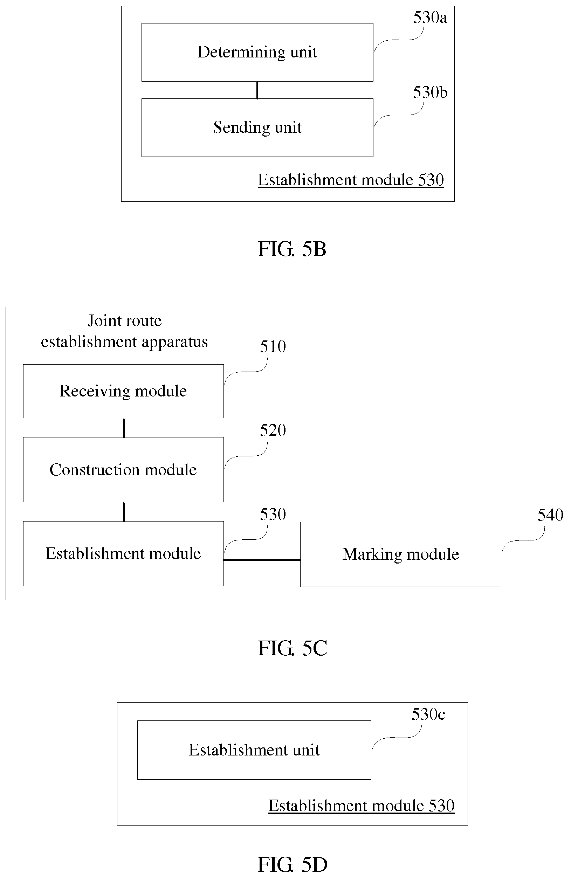

FIG. 5A is a schematic structural diagram of a joint route establishment apparatus. The joint route establishment apparatus may be implemented by software, hardware, or a combination thereof. The joint route establishment apparatus may include a receiving module 510, a construction module 520, and an establishment module 530.

The receiving module 510 is configured to execute the foregoing step 402.

The construction module 520 is configured to execute the foregoing step 403.

The establishment module 530 is configured to execute the foregoing step 404.

Optionally, referring to FIG. 5B to FIG. 5D, the establishment module 530 includes a determining unit 530a and a sending unit 530b.

The determining unit 530a is configured to execute sub-step (1) and sub-step (3) in the foregoing step 404. The sending unit 530b is configured to execute sub-step (2) and sub-step (4) in the foregoing step 404.

Optionally, the apparatus further includes a marking module 540 that is configured to execute the first implementation and the second implementation in the foregoing step 404.

Optionally, the establishment module 530 further includes an establishment unit 530c that is configured to: when a joint route setting request carries a constraint condition of a to-be-transmitted service, establish, based on a unified topology, a joint route that meets the constraint condition of the to-be-transmitted service.

Optionally, the IP layer resource topology information includes at least one of a node, a link, a link cost, a link capacity, an affinity attribute, or a link attribute of an IP layer.

Optionally, the optical layer resource topology information includes at least one of source node information, sink node information, inter-node idle wavelength information, a link distance, intra-node wavelength cross-connection information, trunk resource information, or a link-supported modulation mode of an optical layer.

In this embodiment of the present invention, when the joint route setting request sent by an IP controller is received, it indicates that the IP controller fails to compute a path for the to-be-transmitted service. In this case, in order that transmission of the service can continue, the unified topology between the IP layer and the optical layer is constructed according to the IP layer resource topology information and the optical layer resource topology information, and the joint route is established according to the unified topology. Because the established joint route is determined according to the IP layer resource topology information and the optical layer resource topology information, a case in which multiple VNT links preempt an optical layer resource is avoided. This ensures that all joint routes that need to be established can be successfully established, and improves a success rate of joint route establishment.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing embodiments are not intended to limit this application.

## Claims

1. A route establishment method, wherein the method comprises:
receiving, by an Internet Protocol, IP, controller (110), an indication of a to-be-transmitted service;
computing, by the IP controller (110), a path for the to-be-transmitted service in an IP layer;
if the IP controller fails to compute the path, sending, by the IP controller (110), a joint route setting request to a super controller;
receiving (402), by the super controller (130), the joint route setting request sent by the IP controller (110);
determining (403), by the super controller (130), node resource information of the IP layer and node resource information of an optical layer according to IP layer resource topology information and optical layer resource topology information, respectively, and constructing a unified topology between the IP layer and the optical layer based on the node resource information of the IP layer and the node resource information of the optical layer, wherein the unified topology is used to indicate topological relationships between all nodes comprised at the IP layer and the optical layer; and
establishing (404), by the super controller (130), based on the unified topology, a joint route,
wherein the establishing, by the super controller (130), based on the unified topology, a joint route comprises:
determining, based on the unified topology and from the optical layer resource topology information, optical layer information required for establishing the joint route;
sending, to an optical controller (120), the optical layer information required for establishing the joint route, so that the optical controller establishes an optical layer link;
when receiving a first establishment success message sent by the optical controller, determining, based on the unified topology and from the IP layer resource topology information, IP layer information required for establishing the joint route, wherein the first establishment success message is used to indicate that the optical layer link has been successfully established; and
sending, to the IP controller (110), the IP layer information required for establishing the joint route, so that the IP controller establishes an IP layer link,
wherein before the determining, based on the unified topology and from the IP layer resource topology information, IP layer information required for establishing the joint route, the method further comprises:
marking, by the super controller (130), the optical layer information required for establishing the joint route in the optical layer resource topology information as occupied information.

2. The method according to claim 1, wherein after the sending, to the IP controller (110), the IP layer information required for establishing the joint route, the method further comprises:
when receiving a second establishment success message sent by the IP controller, marking, by the super controller (130), the IP layer information required for establishing the joint route in the IP layer resource topology information as occupied information, wherein the second establishment success message is used to indicate that the IP layer link has been successfully established.

3. The method according to any one of claims 1 to 2, wherein the establishing, by the super controller (130), based on the unified topology, a joint route comprises:
when the joint route setting request carries a constraint condition of a to-be-transmitted service, establishing, based on the unified topology, a joint route that meets the constraint condition of the to-be-transmitted service.

4. The method according to claim 1, wherein the IP layer resource topology information comprises at least one of a node, a link, a link cost, a link capacity, an affinity attribute, or a link attribute of the IP layer.

5. The method according to claim 1, wherein the optical layer resource topology information comprises at least one of source node information, sink node information, inter-node idle wavelength information, a link distance, intra-node wavelength cross-connection information, trunk resource information, or a link-supported modulation mode of the optical layer.

6. A system comprising an Internet Protocol, IP, controller (110), an optical controller (120) and a super controller (130), wherein the super controller comprises a receiver, a memory, and a processor, the memory and the receiver are separately connected to the processor, the memory stores program code, and the processor is configured to invoke the program code;
the IP controller (110) is configured to receive an indication of a to-be-transmitted service, to compute a path for the to-be-transmitted service in an IP layer and, upon failing to compute the path, send a joint route setting request to the super controller (130);
the receiver is configured to receive the joint route setting request sent by the IP controller (110);
the processor is configured to determine node resource information of the IP layer and node resource information of an optical layer according to IP layer resource topology information and optical layer resource topology information, respectively, and construct a unified topology between the IP layer and the optical layer based on the node resource information of the IP layer and the node resource information of the optical layer, wherein the unified topology is used to indicate topological relationships between all nodes comprised at the IP layer and the optical layer; and
the processor is configured to establish, based on the unified topology, a joint route,
wherein the processor is further configured to determine, based on the unified topology and from the optical layer resource topology information, optical layer information required for establishing the joint route;
the super controller further comprises a transmitter, wherein
the transmitter is configured to send, to the optical controller (120), the optical layer information required for establishing the joint route, so that the optical controller establishes an optical layer link;
the processor is further configured to: when a first establishment success message sent by the optical controller is received, determine, based on the unified topology and from the IP layer resource topology information, IP layer information required for establishing the joint route, wherein the first establishment success message is used to indicate that the optical layer link has been successfully established; and
the transmitter is further configured to send, to the IP controller (110), the IP layer information required for establishing the joint route, so that the IP controller establishes an IP layer link,
wherein the processor is further configured to:
mark the optical layer information required for establishing the joint route in the optical layer resource topology information as occupied information.

7. The system according to claim 6, wherein the processor is further configured to:
when a second establishment success message sent by the IP controller (110) is received, mark the IP layer information required for establishing the joint route in the IP layer resource topology information as occupied information, wherein the second establishment success message is used to indicate that the IP layer link has been successfully established.

8. The system according to any one of claims 6 to 7, wherein the processor is configured to:
when the joint route setting request carries a constraint condition of a to-be-transmitted service, establish, based on the unified topology, a joint route that meets the constraint condition of the to-be-transmitted service.

9. The system according to claim 6, wherein the IP layer resource topology information comprises at least one of a node, a link, a link cost, a link capacity, an affinity attribute, or a link attribute of the IP layer.

10. The system according to claim 6, wherein the optical layer resource topology information comprises at least one of source node information, sink node information, inter-node idle wavelength information, a link distance, intra-node wavelength cross-connection information, trunk resource information, or a link-supported modulation mode of the optical layer.

## Patentansprüche

1. Routenaufbauverfahren, wobei das Verfahren umfasst:
Empfangen, durch eine Internetprotokollsteuerung, IP-Steuerung (110), einer Angabe eines zu übertragenden Dienstes;
Berechnen, durch die IP-Steuerung (110), eines Pfads für den zu übertragenden Dienst in einer IP-Schicht;
falls die IP-Steuerung scheitert, den Pfad zu berechnen, Senden, durch die IP-Steuerung (110), einer Einstellungsanforderung einer gemeinsamen Route an eine Supersteuerung;
Empfangen (402), durch die Supersteuerung (130), der Einstellungsanforderung der gemeinsamen Route, die durch die IP-Steuerung (110) gesendet wird;
Bestimmen (403), durch die Supersteuerung (130), von Knotenressourceninformationen der IP-Schicht und Knotenressourceninformationen einer optischen Schicht gemäß Ressourcentopologieinformationen der IP-Schicht beziehungsweise Ressourcentopologieinformationen der optischen Schicht, und Konstruieren einer einheitlichen Topologie zwischen der IP-Schicht und der optischen Schicht basierend auf den Knotenressourceninformationen der IP-Schicht und den Knotenressourceninformationen der optischen Schicht, wobei die einheitliche Topologie verwendet wird, um topologische Beziehungen zwischen allen Knoten anzugeben, die an der IP-Schicht und der optischen Schicht enthalten sind; und
Aufbauen (404), durch die Supersteuerung (130), basierend auf der einheitlichen Topologie, einer gemeinsamen Route,
wobei das Aufbauen, durch die Supersteuerung (130), basierend auf der einheitlichen Topologie, einer gemeinsamen Route umfasst:
Bestimmen, basierend auf der einheitlichen Topologie und von den Ressourcentopologieinformationen der optischen Schicht, von Informationen der optischen Schicht, die zum Aufbauen der gemeinsamen Route erforderlich sind;
Senden, an eine optische Steuerung (120), der Informationen der optischen Schicht, die zum Aufbauen der gemeinsamen Route erforderlich sind, sodass die optische Steuerung eine Verknüpfung der optischen Schicht aufbaut;
wenn eine erste Aufbauerfolgsnachricht empfangen wird, die durch die optische Steuerung gesendet wird, Bestimmen, basierend auf der einheitlichen Topologie und von den Ressourcentopologieinformationen der IP-Schicht, von Informationen der IP-Schicht, die zum Aufbauen der gemeinsamen Route erforderlich sind, wobei die erste Aufbauerfolgsnachricht verwendet wird, um anzugeben, dass die Verknüpfung der optischen Schicht erfolgreich aufgebaut wurde; und
Senden, an die IP-Steuerung (110), der Informationen der IP-Schicht, die zum Aufbauen der gemeinsamen Route erforderlich sind, sodass die IP-Steuerung eine Verknüpfung der IP-Schicht aufbaut,
wobei vor dem Bestimmen, basierend auf der einheitlichen Topologie und von den Ressourcentopologieinformationen der IP-Schicht, von Informationen der IP-Schicht, die zum Aufbauen der gemeinsamen Route erforderlich sind, das Verfahren ferner umfasst: Markieren, durch die Supersteuerung (130), der Informationen der optischen Schicht, die zum Aufbauen der gemeinsamen Route in den Ressourcentopologieinformationen der optischen Schicht erforderlich sind, als besetzte Informationen.

2. Verfahren nach Anspruch 1, wobei nach dem Senden, an die IP-Steuerung (110), die Informationen der IP-Schicht, die zum Aufbauen der gemeinsamen Route erforderlich sind, das Verfahren ferner umfasst:
wenn eine zweite Aufbauerfolgsnachricht empfangen wird, die durch die IP-Steuerung gesendet wird, Markieren, durch die Supersteuerung (130), der Informationen der IP-Schicht, die zum Aufbauen der gemeinsamen Route in den Ressourcentopologieinformationen der IP-Schicht erforderlich sind, als besetzte Informationen, wobei die zweite Aufbauerfolgsnachricht verwendet wird, um anzugeben, dass der Verknüpfung der IP-Schicht erfolgreich aufgebaut wurde.

3. Verfahren nach einem der Ansprüche 1 bis 2, wobei das Aufbauen, durch die Supersteuerung (130), basierend auf der einheitlichen Topologie, einer gemeinsamen Route umfasst:
wenn die Einstellungsanforderung der gemeinsamen Route eine Zwangsbedingung eines zu übertragenden Dienstes trägt, Aufbauen, basierend auf der einheitlichen Topologie, einer gemeinsamen Route, die die Zwangsbedingung des zu übertragenden Dienstes erfüllt.

4. Verfahren nach Anspruch 1, wobei die Ressourcentopologieinformationen der IP-Schicht mindestens eines von einem Knoten, einer Verknüpfung, Verknüpfungskosten, einer Verknüpfungskapazität, einem Affinitätsattribut oder einem Verknüpfungsattribut der IP-Schicht umfassen.

5. Verfahren nach Anspruch 1, wobei die Ressourcentopologieinformationen der optischen Schicht mindestens eines von Quellknoteninformationen, Senkknoteninformationen, Leerlaufwellenlängeninformationen zwischen Knoten, einer Verknüpfungsdistanz, Wellenlängenquerverbindungsinformationen zwischen Knoten, Stammressourceninformationen oder einem verknüpfungsunterstützten Modulationsmodus der optischen Schicht umfassen.

6. System, das eine Internetprotokollsteuerung, IP-Steuerung (110), eine optische Steuerung (120) und eine Supersteuerung (130) umfasst, wobei die Supersteuerung einen Empfänger, einen Speicher und einen Prozessor umfasst, der Speicher und der Empfänger separat mit dem Prozessor verbunden sind, der Speicher Programmcode speichert und der Prozessor konfiguriert ist, um den Programmcode aufzurufen; die IP-Steuerung (110) konfiguriert ist, um eine Angabe eines zu übertragenden Dienstes zu empfangen, um einen Pfad für den zu übertragenden Dienst in einer IP-Schicht zu berechnen und bei dem Scheitern, den Pfad zu berechnen, eine Einstellungsanforderung der gemeinsamen Route an die Supersteuerung (130) zu senden;
der Empfänger konfiguriert ist, um die Einstellungsanforderung der gemeinsamen Route zu empfangen, die durch die IP-Steuerung (110) gesendet wird;
der Prozessor konfiguriert ist, um Knotenressourceninformationen der IP-Schicht und Knotenressourceninformationen einer optischen Schicht gemäß Ressourcentopologieinformationen der IP-Schicht beziehungsweise Ressourcentopologieinformationen der optischen Schicht zu bestimmen und eine einheitliche Topologie zwischen der IP-Schicht und der optischen Schicht basierend auf den Knotenressourceninformationen der IP-Schicht und den Knotenressourceninformationen der optischen Schicht zu konstruieren, wobei die einheitliche Topologie verwendet wird, um topologische Beziehungen zwischen allen Knoten anzugeben, die an der IP-Schicht und der optischen Schicht enthalten sind; und der Prozessor konfiguriert ist, um basierend auf der einheitlichen Topologie eine gemeinsame Route aufzubauen,
wobei der Prozessor ferner konfiguriert ist, um basierend auf der einheitlichen Topologie und von den Ressourcentopologieinformationen der optischen Schicht, Informationen der optischen Schicht zu bestimmen, die zum Aufbauen der gemeinsamen Route erforderlich sind;
die Supersteuerung ferner einen Sender umfasst, wobei
der Sender konfiguriert ist, um an die optische Steuerung (120) die Informationen der optischen Schicht zu senden, die zum Aufbauen der gemeinsamen Route erforderlich sind, sodass die optische Steuerung eine Verknüpfung der optischen Schicht aufbaut; der Prozessor ferner konfiguriert ist zum: wenn eine erste Aufbauerfolgsnachricht empfangen wird, die durch die optische Steuerung gesendet wird, Bestimmen, basierend auf der einheitlichen Topologie und von den Ressourcentopologieinformationen der IP-Schicht, von Informationen der IP-Schicht, die zum Aufbauen der gemeinsamen Route erforderlich sind, wobei die erste Aufbauerfolgsnachricht verwendet wird, um anzugeben, dass die Verknüpfung der optischen Schicht erfolgreich aufgebaut wurde; und
der Sender ferner konfiguriert ist, um an die IP-Steuerung (110) die Informationen der IP-Schicht zu senden, die zum Aufbauen der gemeinsamen Route erforderlich sind, sodass die IP-Steuerung eine Verknüpfung der IP-Schicht aufbaut,
wobei der Prozessor ferner konfiguriert ist zum:
Markieren der Informationen der optischen Schicht, die zum Aufbauen der gemeinsamen Route in den Ressourcentopologieinformationen der optischen Schicht erforderlich sind, als besetzte Informationen.

7. System nach Anspruch 6, wobei der Prozessor ferner konfiguriert ist zum:
wenn eine zweite Aufbauerfolgsnachricht empfangen wird, die durch die IP-Steuerung (110) gesendet wird, Markieren der Informationen der IP-Schicht, die zum Aufbauen der gemeinsamen Route in den Ressourcentopologieinformationen der IP-Schicht erforderlich sind, als besetzte Informationen, wobei die zweite Aufbauerfolgsnachricht verwendet wird, um anzugeben, dass die Verknüpfung der IP-Schicht erfolgreich aufgebaut wurde.

8. System nach einem der Ansprüche 6 bis 7, wobei der Prozessor konfiguriert ist zum: wenn die Einstellungsanforderung der gemeinsamen Route eine Zwangsbedingung eines zu übertragenden Dienstes trägt, Aufbauen, basierend auf der einheitlichen Topologie, einer gemeinsamen Route, die die Zwangsbedingung des zu übertragenden Dienstes erfüllt.

9. System nach Anspruch 6, wobei die Ressourcentopologieinformationen der IP-Schicht mindestens eines von einem Knoten, einer Verknüpfung, Verknüpfungskosten, einer Verknüpfungskapazität, einem Affinitätsattribut oder einem Verknüpfungsattribut der IP-Schicht umfassen.

10. System nach Anspruch 6, wobei die Ressourcentopologieinformationen der optischen Schicht mindestens eines von Quellknoteninformationen, Senkknoteninformationen, Leerlaufwellenlängeninformationen zwischen Knoten, einer Verknüpfungsdistanz, Wellenlängenquerverbindungsinformationen zwischen Knoten, Stammressourceninformationen oder einem verknüpfungsunterstützten Modulationsmodus der optischen Schicht umfassen.

## Revendications

1. Procédé d'établissement de route, dans lequel le procédé comprend :
la réception, par un contrôleur de protocole Internet, IP, (110), d'une indication d'un service à transmettre ;
le calcul, par le contrôleur IP (110), d'un chemin pour le service à transmettre dans une couche IP ;
si le contrôleur IP échoue à calculer le chemin, l'envoi, par le contrôleur IP (110), d'une demande de réglage de route conjointe à un super contrôleur ;
la réception (402), par le super contrôleur (130), de la demande de réglage de route conjointe envoyée par le contrôleur IP (110) ;
la détermination (403), par le super contrôleur (130), d'informations de ressource de noeud de la couche IP et d'informations de ressource de noeud d'une couche optique en fonction d'informations de topologie de ressource de couche IP et d'informations de topologie de ressource de couche optique, respectivement, et la construction d'une topologie unifiée entre la couche IP et la couche optique sur la base des informations de ressource de noeud de la couche IP et des informations de ressource de noeud de la couche optique, dans lequel la topologie unifiée est utilisée pour indiquer des relations topologiques entre tous les noeuds compris dans la couche IP et la couche optique ; et
l'établissement (404), par le super contrôleur (130), sur la base de la topologie unifiée, d'une route conjointe,
dans lequel l'établissement, par le super contrôleur (130), sur la base de la topologie unifiée, d'une route conjointe comprend :
la détermination, sur la base de la topologie unifiée et des informations de topologie de ressource de couche optique, d'informations de couche optique requises pour établir la route conjointe ;
l'envoi, à un contrôleur optique (120), des informations de couche optique requises pour établir la route conjointe, de sorte que le contrôleur optique établit une liaison de couche optique ;
lors de la réception d'un premier message de réussite d'établissement envoyé par le contrôleur optique, la détermination, sur la base de la topologie unifiée et des informations de topologie de ressource de couche IP, d'informations de couche IP requises pour établir la route conjointe, le premier message de réussite d'établissement étant utilisé pour indiquer que la liaison de couche optique a été établie ; et
l'envoi, au contrôleur IP (110), des informations de couche IP requises pour établir la route conjointe, de sorte que le contrôleur IP établit une liaison de couche IP,
dans lequel avant la détermination, sur la base de la topologie unifiée et à partir des informations de topologie de ressource de couche IP, d'informations de couche IP requises pour établir la route conjointe, le procédé comprend en outre :
le marquage, par le super contrôleur (130), des informations de couche optique requises pour établir la route conjointe dans les informations de topologie de ressources de couche optique comme informations occupées.

2. Procédé selon la revendication 1, dans lequel après l'envoi, au contrôleur IP (110), des informations de couche IP requises pour établir la route conjointe, le procédé comprend en outre :
lors de la réception d'un second message de réussite d'établissement envoyé par le contrôleur IP, le marquage, par le super contrôleur (130), des informations de couche IP requises pour établir la route conjointe dans les informations de topologie de ressource de couche IP comme informations occupées, dans lequel le second message de réussite d'établissement est utilisé pour indiquer que la liaison de couche IP a été établie avec succès.

3. Procédé selon l'une quelconque des revendications 1 à 2, dans lequel l'établissement, par le super contrôleur (130), sur la base de la topologie unifiée, d'une route conjointe comprend :
lorsque la demande de réglage de route conjointe transporte une condition de contrainte d'un service à transmettre, l'établissement, sur la base de la topologie unifiée, d'une route conjointe qui satisfait la condition de contrainte du service à transmettre.

4. Procédé selon la revendication 1, dans lequel les informations de topologie de ressources de couche IP comprennent au moins l'un parmi un noeud, une liaison, un coût de liaison, une capacité de liaison, un attribut d'affinité, ou un attribut de liaison de la couche IP.

5. Procédé selon la revendication 1, dans lequel les informations de topologie de ressource de couche optique comprennent au moins l'un parmi des informations de noeud source, des informations de noeud collecteur, des informations de longueur d'onde de repos inter-noeuds, une distance de liaison, des informations de connexion croisée de longueur d'onde entre noeuds, des informations de ressource de tronc, ou un mode de modulation pris en charge par liaison de la couche optique.

6. Système comprenant un contrôleur de protocole Internet, IP, (110), un contrôleur optique (120) et un super contrôleur (130), dans lequel le super contrôleur comprend un récepteur, une mémoire et un processeur, la mémoire et le récepteur sont connectés séparément au processeur, la mémoire stocke un code de programme, et le processeur est configuré pour appeler le code de programme ;
le contrôleur IP (110) est configuré pour recevoir une indication d'un service à transmettre, pour calculer un chemin pour le service à transmettre dans une couche IP et, lors d'un échec de calcul du chemin, envoyer une demande de réglage de route conjointe au super contrôleur (130) ;
le récepteur est configuré pour recevoir la demande de réglage de route conjointe envoyée par le contrôleur IP (110) ;
le processeur est configuré pour déterminer des informations de ressource de noeud des informations de ressource de couche IP et des informations de ressource de noeud d'une couche optique en fonction d'informations de topologie de ressource de couche IP et d'informations de topologie de ressource de couche optique, respectivement, et construire une topologie unifiée entre la couche IP et la couche optique sur la base des informations de ressource de noeud de la couche IP et des informations de ressource de noeud de la couche optique, dans lequel la topologie unifiée est utilisée pour indiquer des relations topologiques entre tous les noeuds compris dans la couche IP et la couche optique ; et
le processeur est configuré pour établir, sur la base de la topologie unifiée, une route conjointe,
dans lequel le processeur est en outre configuré pour déterminer, sur la base de la topologie unifiée et des informations de topologie de ressource de couche optique, des informations de couche optique requises pour établir la route conjointe ;
le super contrôleur comprend en outre un émetteur, dans lequel
l'émetteur est configuré pour envoyer, au contrôleur optique (120), les informations de couche optique requises pour établir la route conjointe, de sorte que le contrôleur optique établit une liaison de couche optique ;
le processeur est en outre configuré pour : lorsqu'un premier message de réussite d'établissement envoyé par le contrôleur optique est reçu, déterminer, sur la base de la topologie unifiée et des informations de topologie de ressource de couche IP, des informations de couche IP requises pour établir la route conjointe, dans lequel le premier message de réussite d'établissement est utilisé pour indiquer que la liaison de couche optique a été établie ; et
l'émetteur est en outre configuré pour envoyer, au contrôleur IP (110), les informations de couche IP requises pour établir la route conjointe, de sorte que le contrôleur IP établit une liaison de couche IP,
dans lequel le processeur est en outre configuré pour :
marquer les informations de couche optique requises pour établir la route conjointe dans les informations de topologie de ressource de couche optique comme informations occupées.

7. Système selon la revendication 6, dans lequel le processeur est en outre configuré pour :
lorsqu'un second message de réussite d'établissement envoyé par le contrôleur IP (110) est reçu, marquer les informations de couche IP requises pour établir la route conjointe dans les informations de topologie de ressource de couche IP comme informations occupées, dans lequel le second message de réussite d'établissement est utilisé pour indiquer que la liaison de couche IP a été établie avec succès.

8. Système selon l'une quelconque des revendications 6 à 7, dans lequel le processeur est configuré pour :
lorsque la demande de réglage de route conjointe transporte une condition de contrainte d'un service à transmettre, établir, sur la base de la topologie unifiée, une route conjointe qui satisfait à la condition de contrainte du service à transmettre.

9. Système selon la revendication 6, dans lequel les informations de topologie de ressources de couche IP comprennent au moins l'un parmi un noeud, une liaison, un coût de liaison, une capacité de liaison, un attribut d'affinité, ou un attribut de liaison de la couche IP.

10. Système selon la revendication 6, dans lequel les informations de topologie de ressource de couche optique comprennent au moins l'un parmi des informations de noeud source, des informations de noeud collecteur, des informations de longueur d'onde de repos entre noeuds, une distance de liaison, des informations de connexion croisée de longueur d'onde entre noeuds, des informations de ressource de tronc, ou un mode de modulation pris en charge par liaison de la couche optique.
